# EUROPEAN PATENT APPLICATION

(11) **EP 4 742 761 A1**
(43) Date of publication of application: **13.05.2026**
(21) Application number: 24211468.4
(22) Date of filing: 07.11.2024
(51) Int. Cl.: H04W 48/14, H04W 52/02

(54) **TRANSMISSION OF INDICATION TO ON-DEMAND SIB1 RECEPTION**

(71) Applicant: Panasonic Intellectual Property Corporation of America, Torrance, CA 90504 (US)
(72) Inventor: KURUVATTI, Nandish, 63225 Langen (DE); LI, Hongchao, 63225 Langen (DE); SUZUKI, Hidetoshi, Osaka, 571-8501 (JP); HORIUCHI, Ayako, Osaka, 571-8501 (JP)
(74) Representative: Grünecker Patent- und Rechtsanwälte PartG mbB

(57) **Abstract**

Provided are a communication apparatus, a network node, and communication methods for a communication apparatus and for a network node. The communication apparatus comprises: a transceiver, which, in operation, receives an indication indicative of at least one out of monitoring duration, a periodicity, a validity duration, or an ON/OFF status of an on-demand common signal; and circuitry, which, in operation, determines, based on the indication, the monitoring duration, the periodicity, the validity duration, and/or the ON/OFF status of the on-demand common signal.

## Description

### BACKGROUND

### 1. Technical Field

The present disclosure relates to transmission and reception of signals in a communication system. In particular, the present disclosure relates to methods and apparatuses for such transmission and reception.

### 2. Description of the Related Art

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE, LTE-A, and NR, further modifications and options may facilitate efficient operation of the communication system as well as particular devices pertaining to the system.

### SUMMARY

One non-limiting and exemplary embodiment facilitates providing indication of common channel status, including SIB1 and other common channels, for a cell with on-demand SIB1.

In an embodiment, the techniques disclosed here feature communication apparatus, comprising a transceiver, which, in operation, receives an indication indicative of at least one out of monitoring duration, a periodicity, a validity duration, or an ON/OFF status of an on-demand common signal; and circuitry, which, in operation, determines, based on the indication, the monitoring duration, the periodicity, the validity duration, and/or the ON/OFF status of the on-demand common signal.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF DRAWINGS

**Fig. 1** shows an exemplary architecture for a 3GPP NR system;
**Fig. 2** illustrates transmission related to on-demand system information block 1 (OD-SIB1);
**Fig. 3** illustrates an on-demand SIB-1 transmission window;
**Fig. 4** illustrates transmission of on-demand SIB1 without an explicit end;
**Fig. 5** illustrates a communication system comprising a communication apparatus and a network node;
**Fig. 6** illustrates common signal duration / status determination circuitry of a communication apparatus;
**Fig. 7** illustrates common signal duration / status configuration circuitry of a network node;
**Fig. 8** illustrates steps of a communication method for a communication apparatus;
**Fig. 9** illustrates steps of a communication method for a network node;
**Fig. 10** illustrates steps of a communication method of exemplary embodiments including determining whether on-demand SIB1 is to be requested;
**Fig. 11** illustrates steps of a communication method of exemplary embodiments including storing of the content of SIB1;
**Fig. 12** illustrates steps of a communication method of exemplary embodiments including acquisition of a new SIB1; and
**Figs. 13 and 14** illustrate steps of communication methods of exemplary embodiments including determining whether a limited monitoring duration for SIB1 is configured;
**Figs. 15 to 17** illustrate steps of communication methods of exemplary embodiments including determining the ON/OFF status of paging and/or PRACH.
**Fig. 18** shows exemplary functional split options in 5G O-RAN.

### DETAILED DESCRIPTION

### 5G NR system architecture and protocol stacks

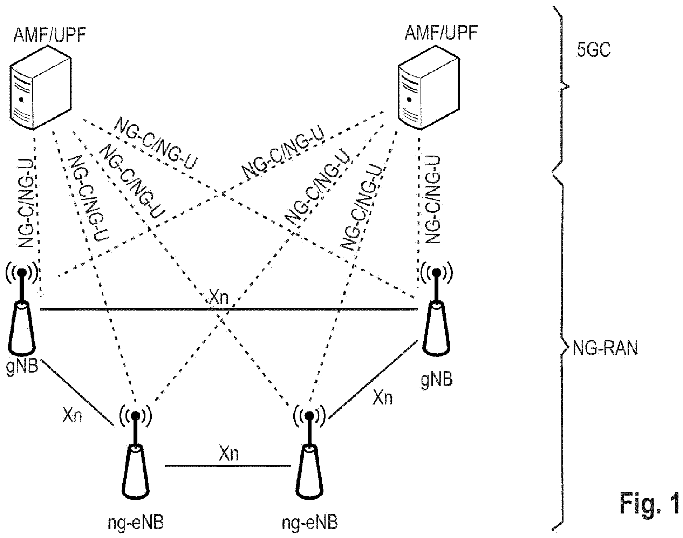

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in Fig. 1 (see e.g. 3GPP TS 38.300 v15.6.0, section 4).

### Network energy saving (NES)

In telecommunications networks, network energy saving (NES) has been identified as an important issue with regard to environmental sustainability, to reduce environmental impact (greenhouse gas emissions), and for operational cost savings. In 3GPP 5G Release 19, work items for NES have been formulated including the following four features (see e.g. RP-234065, "New WID: Enhancements of network energy savings for NR", section 4).

Firstly, procedures and signaling method(s) are to be specified to support on-demand SSB (synchronization signal block) SCell (Secondary cell) operation for UEs (user equipments) in connected mode configured with carrier aggregation (CA), for both intra-/inter-band CA. This includes selection of triggering method(s) such as UE uplink wake-up-signal using an existing signal/channel, cell on/off indication via backhaul, and SCell activation/deactivation signaling. It is noted that on-demand SSB transmission can be used by UE for at least SCell time/frequency synchronization, L1/L3 (layer 1 / layer3) measurements and SCell activation, and is supported for FR1 (frequency range 1, including sub-6 GHz frequency bands) and FR2 (including frequency bands from 24.25 GHz to 71.0 GHz) in non-shared spectrum.

Secondly, procedures and signaling method(s) are to be studied to support on-demand SIB1 (system information block 1) for UEs in idle/inactive mode. This includes triggering method by uplink wake-up-signal using an existing signal/channel, wake-up-signal configuration provisioning to UE, and information exchange between gNBs at least for the configuration of wake-up signal, if necessary.

Thirdly, adaptation of common signal/channel transmissions is to be specified, including adaptation of SSB in time domain, e.g. adapting periodicity, and adaptation of PRACH in time domain (a further issue for study and possible specification is adaptation of PRACH (physical random access channel) in spatial domain, e.g. non-uniform PRACH resources per SSB), and adaptation of paging occasions including confining the paging occasions in the time domain where paging signals, e.g. paging messages, are received. Therein, it is desirable to have no negative impact to legacy UEs, unless significant benefits are shown.

Fourthly, the corresponding core requirements for the above features are to be specified.

In the following, signaling method(s) for supporting on-demand SIB1 (as well as for other common signals in a cell with on-demand SIB1) are discussed. In this disclosure, the terms "Release (Rel.) 19 NES capable UE", "NES capable UE", and "Rel. 19 UE" are used to exemplarily refer to a UE capable of receiving OD-SIB1 and to access a cell transmitting OD-SIB1. Correspondingly, a cell transmitting OD-SIB1 is exemplarily referred to as a "NES cell".

### On-demand SIB1

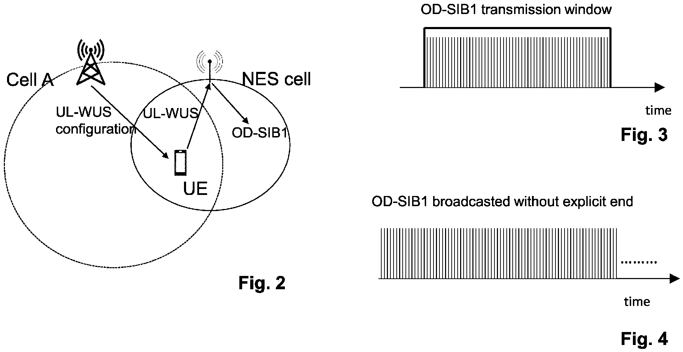

Signaling related to the configuration, requesting, and transmission of on-demand SIB1 (OD-SIB1) are shown in **Fig. 2****.** For discussion purpose, "Cell A" may refer to a cell that is periodically transmitting its own SIB1 (system information block 1), and "NES Cell" may refer to a cell that may transmit SIB1 on demand in response to UL WUS from a user equipment (UE).

As shown in **Fig. 2****,** a NES capable UE receives a configuration for an uplink wakeup signal (UL-WUS) from a cell "Cell A. Subsequently, by sending an UL-WUS, the UE can trigger or request the NES cell to transmit an on-demand SIB. Following this request, the NES cell can choose to transmit the SIB1. It is noted that whether or not the OD-SIB1 will be transmitted from cell A may be up to the network implementation and may, for instance, depend on the NES policy applied for the NES cell. Possible factors in this decision may comprise a number of requesting UEs to be served or a network energy saving target.

It is further noted that in the context of network energy saving, usage of physical random access channel (PRACH) for an uplink wakeup signal (UL WUS) to trigger the SIB1 is being discussed.

For the further study of on-demand SIB1 for idle/inactive mode, the following cases may be considered:
- Case 1: Option 1+A+X;
- Case 2: Option 1+B+X;
- Case 3: Option 2+B+Y;
where the options 1/2/A/B/X/Y are defined below:
- On target cell of UL WUS transmission:
   - Option 1: UE transmits UL WUS to NES Cell;
   - Option 2: UE transmits UL WUS to Cell A;
- On configuration provision for UL WUS transmission:
   - Option A: UE obtains the UL WUS configuration from NES Cell;
   - Option B: UE obtains the UL WUS configuration from Cell A;
- On receiving of SIB1:
   - Option X: UE receives on-demand SIB1 from NES Cell;
   - Option Y: UE receives on-demand SIB1 from Cell A.

The following discussion is to be understood to be applicable at least to the above-identified "Case 2".

As possible assumption in UL WUS design for SIB1 request, a dedicated PRACH resource or resources may be used for the SIB1 request. With this assumption, details on time, frequency, and/or PRACH preamble resources for the UL WUS need to be specified. A further point to be specified is whether RACH resource for SIB1 request could be used for an initial access procedure and/or an on-demand SI procedure.

In the UL WUS design, operation scenarios to be considered may include the following: In a Scenario 1, the UE requests SIB1 to camp on a NES cell. In Scenario 2, the UE requests SIB1 to perform random access procedure to make RRC connection to a NES cell.

"Camping on a cell" means that the UE associates itself with the cell after having completed cell (re)selection, registers its presence with the network, and remains connected to it for communication purposes. A UE camping on a cell can receive system information (e.g. SIB1), monitor paging information periodically and launch random access when necessary to establish RRC connection.

In view of the above discussion, in the present disclosure, a random access wakeup signal is considered as an example of the UL WUS. In particular, a random access procedure may be started for transmitting the UL-WUS when the UE is in idle/inactive mode. Other possibilities, for sending an UL WUS, in particular for a UE in connected mode, include PUCCH-based, configured grant PUCCH-based, L2 MAC CE based, L3 msg 3 or msg 5 based UL WUS.

Further, as described above, a UE transmits an uplink request for switching or adaptation of a common channel. The "uplink request" may be the aforementioned UL WUS or a similar signal, but it is not limited to this particular term. Irrespectively of its name, the uplink request is a signal for requesting or triggering switching or adaptation of a common channel (or signal). The uplink request may also be referred to as an uplink trigger or triggering signal.

A resource allocation for the SIB1 is signaled using a PDCCH that is monitored within a dedicated search space referred to as "type 0 PDCCH common search space". Accordingly, the PDCCH for monitoring may be referred to as "type 0 PDCCH". In accordance with the allocation, the SIB1 is transmitted via PDSCH. In the present disclosure, the expressions "monitoring for the SIB" and "monitoring the SIB1" are used to comprise to monitoring the type 0 PDCCH of the type 0 PDCCH common search space which in turn gives the PDSCH scheduling information for the SIB1, and "monitoring occasions" for the SIB1 referto monitoring occasions for type 0 PDCCH.

It is noted that a time window for monitoring the type 0 PDCCH carrying the scheduling information for SIB1 may be related to a time window in which the SIB1 is transmitted on PDSCH. For instance, the duration of the time window for monitoring the type 0 PDCCH may be the same duration as the time window for the SIB1 broadcast. On the other hand, if the type 0 PDCCH monitoring is not limited by a time window, the SIB1 broadcast may be unlimited as well.

In the following, some points regarding OD-SIB1 transmission are discussed. In particular, type 0 PDCCH monitoring occasions for on-demand SIB1 may be configured within a time window. Options for indicating a starting time and a duration of the time window for type 0 PDCCH monitoring occasions include indication in the random access response (RAR) of the UL-WUS transmission, or indication in the configuration of the UL WUS.

Furthermore, a reference time point to determine the starting time of the above-mentioned time window is to be defined. As possible options, the reference time point may be defined based on the RAR reception time of the UL-WUS transmission, based on the UL-WUS transmission time, or based on a RAR window of the UL-WUS transmission.

Another point of discussion is the behavior of a UE camped in a NES cell with regard to common signaling such as paging reception, SIB1 update, launching of random access procedure via PRACH, etc. In this discussion, the Rel. 19 NES UE behavior has been assumed to be the same as the one defined as the legacy camped state. It is further assumed that a cell for which SIB1 request is available can periodically broadcast SIB1. According to a further assumption, if a UE has a SIB1 request configuration for a cell, the UE needs to check if SIB1 is currently being broadcast or provided on demand for that cell before requesting SIB1 of that cell.

### Further issues

In view of the above-mentioned points of discussion, the authors have identified the following issues in connection with the SIB1 transmission of an OD-SIB1 capable NES cell upon receiving an UL WUS.

In particular, the on-demand SIB1 may be transmitted either within a time window, as shown in **Fig. 3****,** or broadcast constantly and periodically without an explicitly configured end, as shown in **Fig. 4****.** In view of this, the authors of this disclosure have identified an issue of how to indicate the gNB operation to the UE regarding whether the OD-SIB1 is transmitted for a limited period or periodic and without end. An additional issue regarding the SIB1 transmission is what the UE behavior and procure should look like for checking if SIB1 is being broadcast and for acquiring latest SIB1 information.

Further issues identified by the authors relate to possible operating states for the NES cell, which may be dependent on the gNB implementation, including an active state, an inactive state and a "conditionally active" state.

An active state is a state where the OD-SIB1 is being transmitted (or "ON") and the paging / PRACH are also active or in an ON state (which means that the UE can be paged and launch a random access procedure on PRACH).

In an inactive state, the OD-SIB1 is not being transmitted ("OFF"), and paging and PRACH are OFF as well.

Given the above-described active and inactive states, the NES Cell active time is determined by the time window for the OD-SIB1 transmission.

In addition, a "conditionally active" state can be considered where, after the OD-SIB1 has been triggered and transmitted, the OD-SIB1 is OFF, but paging/PRACH are still ON. UEs that have received the OD-SIB1 before may still use the configuration of paging and PRACH in accordance with the SIB1.

In view of the possible inactive and "conditionally active" states, a further issue recognized by the authors is how to indicate whether the paging/PRACH are ON or OFF when OD-SIB1 transmission has stopped. Moreover, it is to be considered how long the UEs that are camped on the NES cell should consider the information provided by OD-SIB1 valid after OD-SIB1 transmission has stopped.

### Embodiments

In view of the above-identified issues, the present disclosure provides techniques for indication of common channel status for a cell with on-demand SIB1.

The present disclosure in particular provides base stations, which may include network nodes, scheduling devices or scheduling apparatuses (such as scheduling nodes), corresponding methods for base stations, communication devices or communication apparatuses (e.g. adapted/configured to perform the function of a communication terminal in a communication system) such as radio communication apparatuses or wireless communication apparatuses, corresponding methods and (computer) programs (e.g. stored on a memory) for communication devices (or apparatuses), communications systems comprising such scheduling devices and communication devices, as well as integrated circuits which, in operation, control a processes of scheduling devices/communication devices to perform the respective methods.

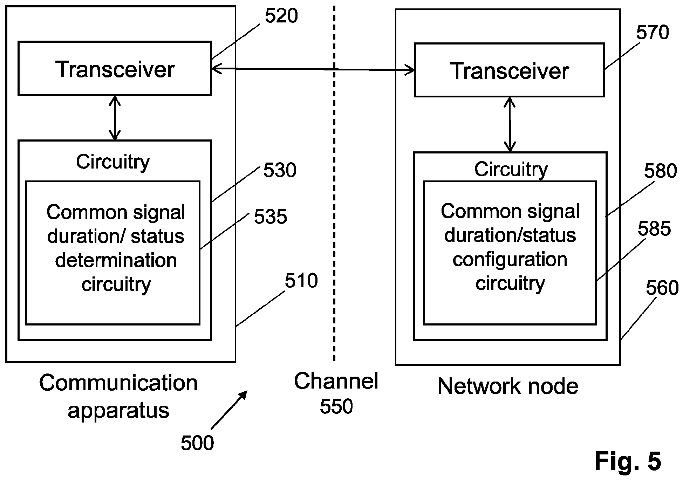

An example of such communication system is illustrated in **Fig. 5****.** The communication system 500 may be a wireless communication system in accordance with the technical specifications of 3GPP such as 5G, in particular a NR (New Radio) communication system. However, the present disclosure is not limited to 3GPP NR terrestrial networks (TN) and may also be applied to NTNs (non-terrestrial networks) or other wireless or cellular systems.

**Fig. 5** illustrates a general, simplified and exemplary block diagram of a communication apparatus 510 (which may be exemplarily assumed to be a user equipment (UE) or communication terminal or communication apparatus) and a network node (or scheduling device or scheduling node, here exemplarily assumed to be located in a base station 560, e.g. in a LTE eNB (alternatively termed ng-eNB) or the gNB in 5G NR) in the communication system 500. However, in general, a scheduling device or network node may also be a terminal in case of a sidelink connection between two terminals. Moreover, in particular with respect to the use cases of URLLC (ultra reliable low latency communication), eMBB (enhanced mobile broadband), and mMTC (massive machine type communication), the communication apparatus 510 may also be a sensor device, a wearable device, or a connected vehicle, or a controller of an automated machine in an industrial factory.

As illustrated in **Fig. 5****,** the communication apparatus 510 and the network node, scheduling device or base station 560 (eNB/gNB) may communicate with each other over a (wireless) physical channel 550 respectively using their transceivers 520 (communication apparatus side) and 570 (base station side). Together, the base station 560 and the communication apparatus 510 may form the communication system 500. The communication system 500 may further include other entities such as those shown in **Fig. 1****,** e.g. a plurality of UEs connected to the base station or a relay node relaying signals to/from the base station from/to one or more UEs, or a plurality of base stations each serving in one or more serving cells.

As illustrated in **Fig. 5****,** the communication apparatus 510 may comprise a transceiver 520 and circuitry (or processing and/or control circuitry) 530, and the base station 560 may comprise a transceiver 570 (e.g. a transmitter and/or a receiver) and (processing and/or control) circuitry 580.

The term ***"transceiver"*** refers to a front end including on or more antenna (more than one antenna in case beamforming is used). A transceiver here can further include an amplifier, some modulators for modulation of the baseband signal onto the system carrier, possibly also the D/A converter and possibly further signal improvement circuitry. In general, a transceiver may comprise and/or function as a receiver and/or a transmitter. In this disclosure, in other words, the term *"transceiver"* is used for hardware and software components that allow a communication apparatus (or "communication device") to transmit and/or receive radio signals over a wireless channel. Accordingly, a transceiver corresponds to a receiver, a transmitter, or a combination of receiver and transmitter. Typically, a base station and a communication device are assumed to be capable of transmitting as well as receiving radio signals. However, particularly with respect to some applications of eMBB, mMTC and URLLC (smart home, smart city, industry automation etc.), cases are conceivable in which a device, such as a sensor, only receives signals. A transmitter may be responsible for performing the process of transmitting and other processes related thereto. A receiver may be responsible for performing the process of receiving and other processes related thereto, such as monitoring a channel. In general, a transceiver may be controlled by a circuitry to perform said transmitting and/or receiving.

The term ***"circuitry"*** herein refers to any hardware and/or software. For example, the circuitry may include one or more processors (or processing units or any LSIs), microcontrollers, programmable hardware such as FPGA(s) (field programmable gate array) and/or dedicated hardware such as ASIC(s) (application-specific integrated circuit) or the like, possibly further including further digital or analog circuits.

Between the transceiver and the processing circuitry there may be an input/output point (or node) over which the processing circuitry, in operation, can control the transceiver, i.e. control the receiver and/or the transmitter and exchange reception/transmission data. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc.

As mentioned above, references to 5G New Radio communication systems are merely exemplary, and the present invention is applicable to other communication systems including present and future standards. Moreover, short expressions "UE" and "gNB" may be used for the reader's convenience, and descriptions of behavior of a "UE" and "gNB" in the description can more generally be applied to a communication apparatus or a base station. Further, the expressions "UE" and "gNB" before "circuitry", "transmitter", "receiver" and "transceiver" may be used for short to distinguish the transceivers and circuitries of a communication apparatus 210 and a base station 260, without implying any limitation to networks such as 3GPP NR networks.

As shown in **Fig. 5****,** provided is a communication apparatus 510. The communication apparatus 510 comprises a transceiver 520 and circuitry 530. The transceiver, in operation, receives an indication indicative of at least one out of monitoring duration, a periodicity, a validity duration, or an ON/OFF status of an on-demand common signal. The circuitry 520, in operation, determines, based on the indication, the monitoring duration, the periodicity, the validity duration, and/or the ON/OFF status of the on-demand common signal.

As also shown in **Fig. 5****,** further provided is a network node 560. The network node 560 comprises a transceiver 570 and circuitry 580. The circuitry 580, in operation, configures at least one out of monitoring duration, a periodicity, a validity duration, or an ON/OFF status of an on-demand common signal. The transceiver 570, in operation, transmits an indication indicative at least one out the monitoring duration, the periodicity, the validity duration, and/or the ON/OFF status of the on-demand common signal.

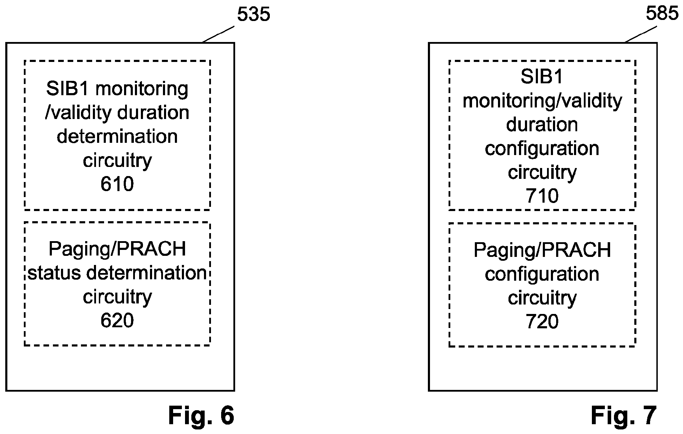

The UE circuitry 530 may be exemplarily considered to comprise common signal duration and/or status determination circuitry 535. As is further shown in **Fig. 6****,** exemplary common signal duration / status determination circuitry 535 may further comprise one or both of SIB1 monitoring and/or validity duration determination circuitry 610 and/or paging/PRACH status determination circuitry 620.

The network node circuitry 580 may be exemplarily considered to comprise common signal duration and/or status configuration circuitry 585. As is further shown in **Fig. 7****,** exemplary common signal duration / status determination circuitry 585 may further comprise one or both of SIB1 monitoring and/or validity duration configuration circuitry 710 and/or paging/PRACH status configuration circuitry 720.

It is, however, noted that functionalities disclosed herein are in general implemented by circuitries 530 and 580 without being limited to the respective circuitries 535, 610 and 620 or 585, and 710 and 720 described above.

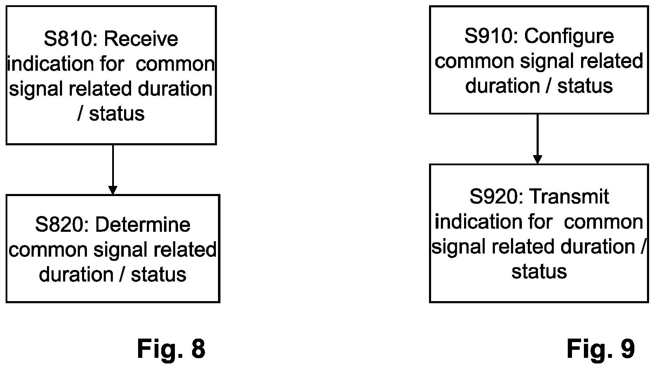

In correspondence with the above-described communication apparatus 510, further provided is a communication method to be performed by a communication apparatus, which is shown in **Fig. 8****.** The communication method for the communication apparatus comprises a step S810 of receiving an indication indicative of at least one out of monitoring duration, a periodicity, a validity duration, or an ON/OFF status of an on-demand common signal, and a step S820 of determining, based on the indication, the monitoring duration, the periodicity, the validity duration, and/or the ON/OFF status of the on-demand common signal.

Moreover, in correspondence with the above-described network node 580, provided is a communication method to be performed by a network node, which is shown in **Fig. 9****.** The communication method for the network node comprises a step S910 of configuring at least one out of monitoring duration, a periodicity, a validity duration, or an ON/OFF status of an on-demand common signal, and a step S920 of transmitting an indication indicative at least one out the monitoring duration, the periodicity, the validity duration, and/or the ON/OFF status of the on-demand common signal.

"Common signal", which may also be called "common channel", refers to a channel or signal, shared by a plurality of or even all UEs within a cell. Examples of common channel include SIB1, other SIB(s), PRACH, paging, or SSB. In the aforementioned scenario of a UE camping on a cell, the common signal may particularly be a SIB1, paging or PRACH, as will be described in the exemplary embodiments to follow.

Moreover, in accordance with the above-disclosed devices and methods as well as the exemplary embodiments to follow, the UE may receive an indication from the gNB regarding transmission of OD-SIB1 for one or more cells. This indication may comprise or regard one or more out of: a transmission window duration, SFN aligned SIB1 monitoring periods, a validity time/duration of the SIB1, and/or the status of PRACH paging (which may be ON or OFF in correspondence with the above-mentioned "conditionally active" and inactive state). The indication may for instance be provided to the UE via one or more out of an UL-WUS configuration, SIB1, MIB (master information block), or the random access response (RAR) to the UL-WUS.

Upon obtaining this indication, determinations by the UE may include determining whether OD-SIB1 will be transmitted periodically and "infinitely" (without configured end) or within a limited duration, determining if the status of common channels are ON/OFF when OD-SIB1 is OFF and/or determining how long this status information is to be deemed valid.

Furthermore, in the above description of the devices and methods disclosed, "determining the monitoring duration" may comprise, at the UE side, determining (based on the received indication) whether or not a limited monitoring duration for the common signal is configured. Correspondingly, at the network node, "configuring the monitoring duration" may comprise determining or deciding whether a limited monitoring duration is to be configured and indicated in accordance with the determination or decision. This determination about a limited monitoring duration may be made for a SIB1 as a common signal.

### UL-WUS configuration based time window indication

In the following, exemplary embodiments will be described where it is determined whether or not a limited monitoring duration for monitoring a SIB1 as a common signal is configured.

In some exemplary embodiments, the on-demand common signal is an on-demand SIB1. The UE receives, as the indication indicative of the monitoring duration, a configuration of an uplink request for the on-demand SIB1. The configuration of the uplink request, e.g. for the aforementioned UL-WUS, may or may not indicate a time window (T) configured for the transmission and/or monitoring of the on-demand SIB1. Based on whether or not the configuration comprises a time window for the SIB1, the UE determines whether the SIB1 is to be monitored within the time window or without a configured end.

The UL-WUS configuration is transmitted from the gNB. For instance, the UE may receive, from cell A shown in **Fig. 2****,** an UL-WUS configuration of a NES cell. For instance, cell A may provide a single configuration applicable to a plurality of cells (including NES cells) or send a plurality of configurations respectively for the plurality of cells. The UL-WUS configurations for one or more cells may be provided in the SIB1 (or other system information) of cell A. Other signaling possibilities for the configuration, such as RRC signaling, are also possible.

If such a transmission and/or monitoring time window is configured in the UL-WUS configuration, the configured time window is assumed as a transmission/monitoring duration for the UL-WUS. If a transmission/monitoring time window is not configured in the UL-WUS configuration, the OD-SIB1 transmission is assumed to be broadcast "infinitely", e.g. periodically without an explicit configured ending time point.

Upon receiving the UL-WUS configuration, and based on the indication, the UE determines the transmission duration of the OD-SIB1. The configuration of the time window may comprise one or more out of a starting time, a duration, and/or a reference point in time. Instead of a duration, an ending time for the time window may be provided as well. Time indication may be in terms of one or more out of frames, subframes, slots, and/or symbols etc. as described in section "Time intervals" below. For instance, the reference point may be based on the time of transmitting the UL-WUS or the time RAR reception time of the UL-WUS transmission. The transmission or monitoring duration of the OD-SIB1 may be a duration after sending the UL-WUS to the NES cell or after receiving the RAR for the UL-WUS. Alternatively, the beginning, duration and/or ending of the time window may be provided with reference to the time of transmitting the UL-WUS configuration, or provided in terms of an absolute timing (such as a frame number).

An UL-WUS configuration based determination of a time window as described in the present section allows the UE to know the behavior of the gNB regarding OF-SIB1 transmission and facilitates harmonization between gNB and UE.

Furthermore, for the UE, unnecessary launching of an OD-SIB1 procedure, e.g. sending an UL-WUS for receiving SIB1, as well as unnecessary waiting or monitoring for a periodic SIB1 transmission outside the transmission window can be avoided.

Moreover, the indication regarding a time window via UL-WUS configuration provides a plain and clear signaling, which facilitates for the UE to expect from the beginning (from the time of receiving the configuration) whether a SIB1 will be scheduled and received within a time window or without a configured end.

### RAR based time window indication

In the following, further exemplary embodiments will be described where it is determined whether or not a limited monitoring duration for monitoring a SIB1 as a common signal is configured.

In some exemplary embodiments, the on demand common signal is an on-demand SIB1. The UE receives, a random access response (RAR), to an uplink request for the SIB1. The RAR comprises, as the indication indicative of the monitoring duration of the SIB1, a bit indicator indicating whether or not the SIB1 is to be monitored within a configured time window or without a configured end.

In accordance with the present embodiments, one or more time windows may be configured and indicated to the UE in the UL-WUS configuration of the NES cell. The UE may receive a configuration of the one or more time window(s) from the gNB. As described earlier, the UL-WUS configuration may be received from cell A (or alternatively, from the NES cell itself). The UE transmits an UL-WUS to the NES cell and receives a RAR for the UL-WUS. The RAR indicates whether the OD-SIB1 scheduling and/or transmission is within a configured time window or whether the SIB1 is broadcast without a configured end.

After receiving the RAR to the UL-WUS, and based on the bit indication in the UL-WUS, the UE determines the transmission duration of OD-SIB1, e.g. within one or more time windows, or without configured end. As described above, the sending time of the UL-WUS or reception time of the RAR may be exemplary reference points for the transmission duration(s).

If the UL-WUS configuration comprises a plurality of time windows, the bit indicator in the RAR may comprise a plurality of bits each indicating, for a respective time window, whether SIB1 will be scheduled / broadcast in the respective time window. Among a plurality of windows, two mutually different time windows may have the same or a different size or duration. Further, if at least one of the bits indicates that a SIB1 is broadcast within the corresponding time window, the UE may know that the SIB1 is not broadcast without configured end time.

Like the above-described UL-WUS configuration, a RAR based determination of a time window as described in the present section allows the UE to know the behavior of the gNB regarding OF-SIB1 transmission and facilitates harmonization between gNB and UE.

Furthermore, for the UE, unnecessary launching of an OD-SIB1 procedure, e.g. sending an UL-WUS for receiving SIB1, as well as unnecessary waiting or monitoring for a periodic SIB1 transmission outside the transmission window can be avoided.

In addition, the indication regarding the configured time window(s) in the RAR provides flexibility to the network. The network can choose to broadcast OD-SIB1 without configured end or within a limited duration (or durations) on the fly, based on factors such as traffic load and/or energy saving requirements, and indicate it only in RAR of UL-WUS.

### SFN aligned monitoring time periods

In the above-described exemplary embodiments, indications are provided which indicate whether an on-demand SIB1 to be monitored during a limited time window or without a configured end. In the present embodiments, techniques are provided that enable the UE to determine whether an on-demand SIB1 is already being transmitted or the UE has to request the on-demand SIB1.

In some embodiments, the on-demand common signal is an on-demand system information block 1, SIB1. The UE receives a configuration of an uplink request for the SIB1. The configuration comprises an indication of a time interval defining a periodicity of the SIB1. Based on periodicity, the UE determines a monitoring timing for monitoring the SIB, and determines the ON/OFF status of the SIB1 by monitoring for the SIB1 at the determined monitoring timing.

The indication of the periodicity may be provided as a combination of a reference time, such as a system frame number (SFN) and a time interval. However, a reference different from the SFN is also possible. For instance, through the UL-WUS configuration received from the gNB (e.g. transmitted by cell A), the UE is indicated that the SIB1 (and/or the corresponding type 0 PDCCH scheduling the SIB1) is configured to be sent every frame having a frame number "SFN mod M", M being an integer. For instance, M=8 but M may also have a smaller or larger value.

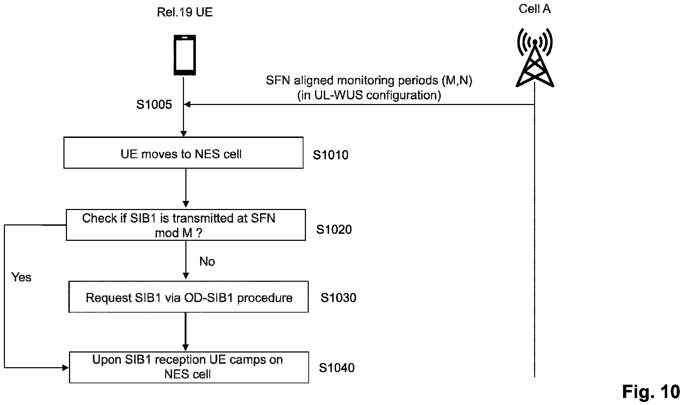

As shown in **Fig. 10****,** after UE may be configured, in a step S1005 of receiving from the gNB (e.g. cell A) an UL-WUS configuration for an NES cell, with an SFN aligned monitoring period or interval M. The UE may the move to the NES cell, step S1005. After having moved into the NES cell, the UE checks, step 1020, whether the SIB1 is transmitted at a monitoring timing resulting from the periodicity (e.g, a timing in frame SFN mod M). If no SIB1 is detected at the configured timing, the UE, in step S1030, requests the SIB1 via OD-SIB1 procedure (e.g. by sending an UL-WUS via RA process). Subsequently, the UE receives the requested SIB1 (if transmitted by the NES cell) and, upon SIB1 reception, camps on the NES cell, as shown in step S1040. If the UE determines in step S1020 that a SIB1 is already being transmitted, the UE directly moves to step S1040 without need for requesting the SIB1. It is noted that in **Fig. 10****,** step S820 from **Fig. 8** is embodied by step S1020, and step S810 is embodied by one or both of steps S1005 and S1020.

Furthermore, as can also be seen from **Fig. 10****,** values for two monitoring periods M and N may be sent in the UL-WUS configuration e.g. with N > M. For instance, if N = 8 as per the above-mentioned example, the second period N may be N = 32 (or N = 16, or N = 64).

For instance, the configuration of the uplink request for the SIB1 may indicate a time window, and the time interval may comprise a first time interval M defining the periodicity within the time window and a second time interval defining the periodicity N outside the time window.

For instance, the beginning, duration and/or ending of the time window may be provided with reference to the time of transmitting the UL-WUS configuration, or provided in terms of an absolute timing (such as a frame number).

It is noted that it is also possible to have M = N. In such a case, one parameter for the SIB1 transmission or monitoring period needs to be sent in UL-WUS configuration, reducing the number of parameters to be configured.

As described in the present embodiments, configuration of reference-aligned monitoring periods facilitates for the UE to know the behavior of the gNB regarding OD-SIB1 transmission and provides for harmonization between the UE and the gNB, e.g. based on the SFN. Furthermore, as mentioned above, the present embodiments allow for the UE to check whether the OD-SIB-1 is currently being broadcast (and does not need to be requested) or not.

### SFN alignment based SIB1 check and content storing

As described in section *"SFN aligned monitoring time periods"* and shown in **Fig. 10****,** the UE checks once in each frame with number "SFN mod N" or "SFN mod M whether or not a SIB1 is transmitted. As mentioned above, M = N is possible as well.

If the UE receives the SIB1 determined monitoring timing, the may store a content of the SIB1 to be used for a random access procedure.

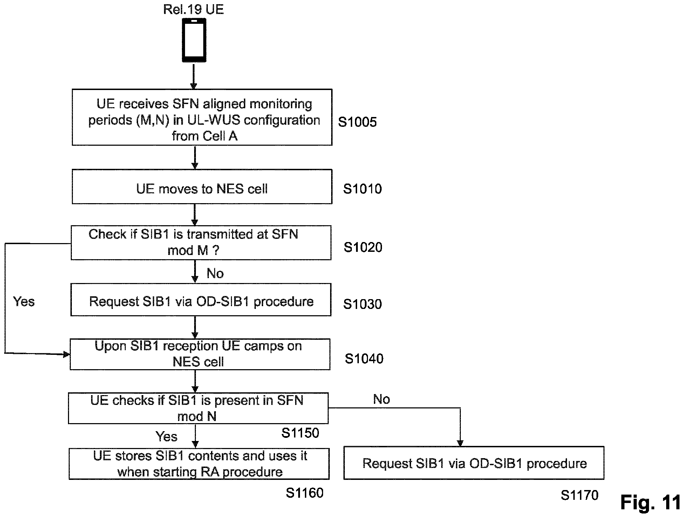

An example is shown in **Fig. 11****,** where steps S1005 to 1040 are the same as in **Fig. 10****.** Then, after the UE has determined that the SIB1 is being transmitted, the UE may monitor, in step S1150 for the SIB1 in every frame with frame number "SFN mod N", (or "SFN mod M"). If the UE receives the SIB1, the UE may keep SIB1 contents including, for RACH, a related probability check. Then, at the time of random access procedure (for "normal" traffic different from the RA used as UL-WUS), e.g. for transmitting user data/content) in step S1160, the stored contents from the latest SIB1 are used. If no SIB1 is present at the configured monitoring time, the UE may request, in step S1170 SIB1 via OD-SIB1 procedure (e.g. by sending an UL-WUS).

It is noted that the above-mentioned probability check relates to UAC (Unified Access Control). In particular, a random access procedure may require the UE to check SIB1 before random access procedure for UAC (Unified Access Control). To determine whether the random access is permitted, the UE makes a comparison between a random value and a parameter "uac-barring factor". The parameter "uac-BarringFactor" represents the probability that access attempt would be allowed during access barring check.

As described in the previous embodiments through the SFN aligned SIB1 transmission and monitoring periodicity, harmonization between the UE and the gNB based on the SFN is facilitates. Furthermore, the UE is enabled to store and use SIB1 contents until SIB1 is transmitted again in the cell.

### SFN alignment based SIB1 check and new SIB1 acquisition

As described in section *"SFN aligned monitoring time periods"* and shown in **Fig. 10****,** the UE checks once in each frame with number "SFN mod N" or "SFN mod M whether or not a SIB1 is transmitted. As mentioned above, M = N is possible as well. Moreover, as shown section *SFN alignment based SIB1 check and content storing",* the UE may store a content of the SIB1 to be used for a random access procedure.

For instance, if receiving the SIB1 at the determined monitoring timing, the UE discards the content of the SIB1 received at the determined monitoring timing, obtains a current SIB1 at a later monitoring timing determined following the periodicity of the SIB1, and uses the content of the current SIB1 for the random access procedure.

According to the present exemplary embodiments, the UE does not keep the contents from the last SIB1 received. Rather, the UE identifies, by monitoring for the SFN, whether the NES cell continues transmitting SFN in every frame with number "SFN mod N" or "SFN mod M". If the UE needs to launch a random access procedure, it can wait for the next transmission timing of the SIB1 in accordance with the periodicity, receive the SIB1 at the determined timing and then use the content of the received SIB1 for the RA procedure.

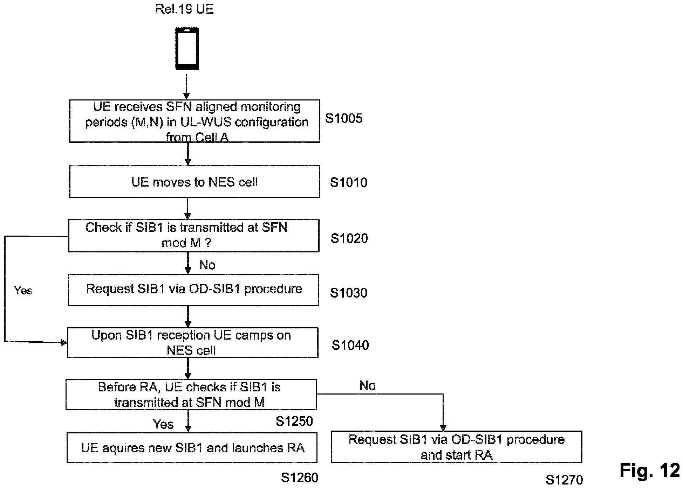

Exemplary method steps for the UE are shown in **Fig. 12****,** where steps S1005 to S1040 are the same as shown in **Figs 10** **and** **11****.** Then, in the present embodiments, before launching (or starting) a random access procedure, the UE checks, in step S1250, if a new SIB1 is transmitted in frame SFN mod M (or SFN mod N). If yes, the UE acquires the new SIB1 and launches the RA using the content of the SIB1 in step S1260. If no SIB1 is available in step S1250, the UE request a SIB1 via OD-SIB1 procedure (e.g. UL-WUS) and starts the RA after receiving the new SIB1 in step S1270.

The UE may also request a SIB1 if an urgent random access procedure needs to be launched before the next SIB1 monitoring occasion in line with the "SFN mod N" or "SFN mod M" periodicity, to avoid waiting for the SIB1 to be transmitted in the next "SFN mod N" or "SFN mod M frame".

The present embodiments facilitate harmonization between the UE and the gNB regarding SIB1 transmission periodicity based on the SFN. Furthermore, the UE knows when the next SIB1 will be transmitted.

### MIB based SIB1 time window indication

in the exemplary embodiments described in sections *"UL-WUS configuration based time window indication"* and *"RAR based time window indication",* techniques have been described for indicating whether the SIB1 is transmitted within a time window or without a configured end. According to the present embodiments, this indication is made via master information block (MIB).

In some exemplary embodiments, the on-demand common signal is an on-demand SIB1. The UE receives a MIB comprising, as the indication indicative of the monitoring duration of the SIB1 a bit indicator or a numerical value. The bit indicator indicates whether or not the SIB1 is to be monitored within a configured time window or without a configured end. The numerical indicator (e.g. ksss) has a first value indicating that the SIB1 is to be monitored within the configured time window or a second value indicating that the SIB1 is to be monitored without a configured end.

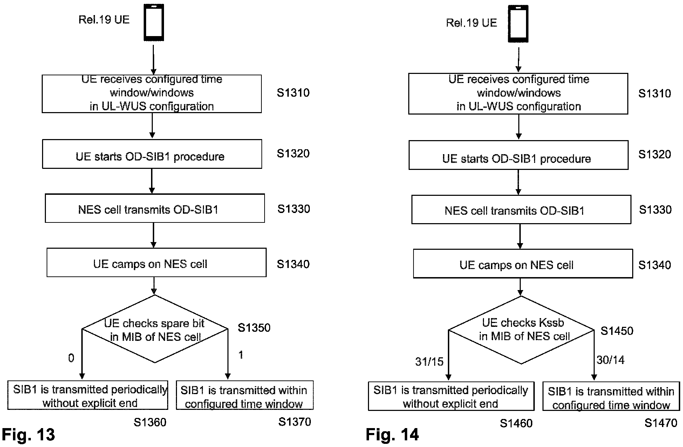

In the following, as shown in **Fig. 13****,** a bit indicator for the time window indication is considered. In step S1310, the UE receives an UL-WUS configuration of a NES cell. In the UL-WUS indication, a time window (or time windows) for SIB1 monitoring/reception are configured and indicated to the UE. Moreover, as described above, the UL-WUS configuration may be received from cell A. In step S1320, the UE starts an on-demand SIB1 procedure (e.g. transmitting an UL WUS), and receives the on-demand SIB1 in step S1340 transmitted by the NES cell. For this initial SIB1 transmission, the UE knows timing and other parameters for monitoring the SIB1 from the configuration that the UE has received in step S1310. Then, in step S1340, the UE camps on the NES cell.

The UE camping on the NES cell receives the MIB including the bit indicator. For instance, a spare bit in the MIB may be used as the bit indicator, or a plurality of spare bits in the MIB if a plurality of time windows are configured. To keep informed on the transmission duration of the SIB1, the UE may monitor the MIB periodically.

In step S1350, the UE checks the spare bit. Upon receiving indication in spare bit, UE determines the transmission duration of OD-SIB1 (e.g. after sending UL-WUS to NES cell or after receiving the RAR for the UL-WUS).

The spare bit in MIB indicates if the OD-SIB1 transmission is within a configured time window (T), as determined in step S1370, or is broadcast "infinitely", without configured end, as determined in step S1360. For instance, "0" indicates limited duration, and "1" indicates "infinite").

Is noted that the present embodiments are not limited to the order of steps shown in **Fig. 14****.** For instance, the UE may receive and check the MIB, as shown by step S1350 before one or both of steps S1320 of starting the on-demand SIB1 procedure and step S1330 of receiving the on-demand SIB1. In such a case, the UE may already know at the time of receiving an initial SIB1 from the NES cell whether the SIB1 is to be monitored and received within the time window or without explicit end.

Alternatively, as shown in **Fig. 14****,** the transmission duration of the SIB1 (within the configured time window or without explicit end) may be indicated by a numerical value in the MIB, e.g. a k_{SSB} value.

The k_{SSB} value is an indicator of the frequency domain offset N_{GSCN}^{Offset} between SSB and the overall resource block grid in number of subcarriers (where GSCN stands for "Global Synchronization Channel Number) or, more generally, as a pointer towards the SSB (for more details, see e.g. 3GPP TS 38.213 version 18.4.0 Release 18, section 13, in particular Tables 13-16 and 13-17). For NES capable UEs (e.g. Release 19 onwards), k_{SSB} values can be used as an indication of the SIB1 transmission duration that the NES capable UE does not interpret as an indication of a frequency domain offset or pointer to SSB (e.g. a reserved value). It is noted that the NES capable UE does not need an indication of the frequency domain offset of SSB or SSB location via k_{SSB} in the MIB because actual k_{SSB} and pdcchConfigSIB1 can be indicated to Rel.19 UEs through UL-WUS configuration which it receives from Cell A. Possible values may be values greater than 23 for FR1 (frequency range) and greater than 11 for FR2.

In **Fig. 14****,** steps S1330 to S1340 are the same as described above in **Fig. 13****.** Then, in step S1450, the UE checks the k_{SSB} value in the MIB, which indicates whether the OD-SIB1 transmission is within a configured time window (T) or is broadcast infinitely. (e.g., 30/14 indicates limited duration, 31/15 indicates infinite for FR1/FR2 respectively). A first value, e.g., 30/14 for FR1/FR2 respectively indicates a limited duration (e.g. transmission within the time window), and a second value, e.g. 31/15 indicates "infinite" SIB1 transmission without explicit end. In accordance with the k_{SSB} value taking the first value or the second value, the UE determines in step S1470 that the SIB1 is transmitted within the configured time window or in step S1460 that the SIB1 is transmitted periodically without explicit end. In accordance with the determination of the steps S1460 or S1470, the UE monitors for the SIB1 within the time window or periodically without explicit end.

An MIB based determination and indication regarding a time window as described in the present section allows the UE to know the behavior of the gNB regarding OF-SIB1 transmission and facilitates harmonization between gNB and UE.

Furthermore, for the UE, unnecessary launching of an OD-SIB1 procedure, e.g. sending an UL-WUS for receiving SIB1, as well as unnecessary waiting or monitoring for a periodic SIB1 transmission outside the transmission window can be avoided.

In addition, provided that the UE monitors and decodes MIB periodically, network can flexibly change OD-SIB1 transmission duration on the fly, using the MIB.

### MIB based paging/PRACH status indication

In the above described embodiments, techniques have been described for indicating the timing of the SIB1 transmission, e.g. whether it is transmitted within a time window or without configured end. In the present embodiments, techniques are provided for paging and PRACH as common signals or channel to indicate whether these common channels are still ON after the on-demand SIB1 transmission duration has expired (e.g. after the time window has ended), as in the aforementioned "conditionally active" state, or OFF, as for instance in the "inactive" state of an NES cell.

In the present exemplary embodiments, the on-demand signal is a paging message (to be received on the downlink) or a physical uplink random access channel (PRACH) of a cell having configured an on-demand SIB1. The UE receives a MIB comprising an indication indicative of the ON/OFF status of the paging message or of the PRACH when the on-demand SIB1 has stopped. The indication may be received as a bit indicator or as numerical indicator k_{SSB} having a first value indicating the ON status and a second value indicating the OFF status. It is noted that the indication may be applicable jointly to both paging and PRACH as common channels or to either paging or PRACH, e.g. depending on whether the NES cell has an uplink or is a downlink cell.

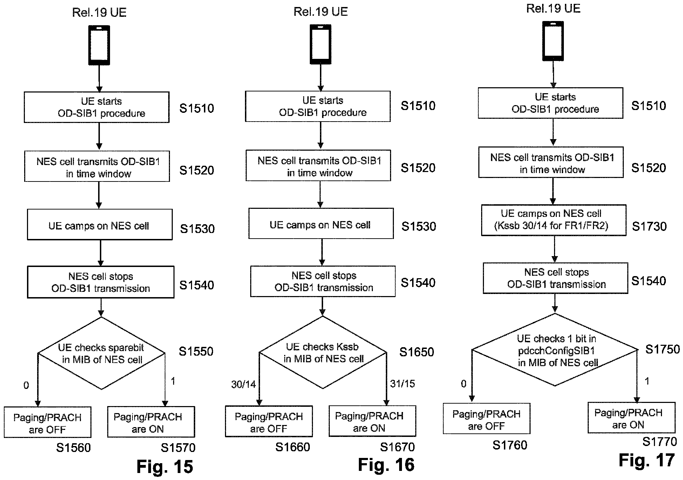

Exemplary steps of the UE behavior to determine the paging and/or PRACH status are shown in **Fig. 15****.** In particular, in step S1510, the UE starts the OD-SIB1 procedure, e.g. by sending an UL-WUS. In step S1520, the UE monitors for the OD-SIB1, which is transmitted by the NES cell within a configured time window. For instance, the UE may have determined that the SIB1 is transmitted for a limited duration within a time window using the above described UL-WUS configuration based or RAR based time window indication.

In step S1540, the NES cell stops OD-SIB1 transmission, which is switched off after transmission duration has expired. The UE stops monitoring for and receiving the SIB1. To determine whether the paging and/or PRACH are in an OFF status or still in an ON status, the UE reads and decodes contents of MIB on the NES cell.

For instance, as shown in step S1550, the UE checks a bit indicator in the MIB, which may be a spare bit. The spare bit value in the MIB indicates if the paging/PRACH status is to be considered ON or OFF in accordance with the above-mentioned conditional active or inactive state. For instance, "0" may indicate paging/PRACH being OFF, and "1" may indicate paging/PRACH being ON. Upon receiving indication in spare bit, UE determines the status of paging and/or PRACH when cell stops transmitting OD-SIB1: OFF, as per step S1560, or ON, as per step S1570.

Another example of exemplary UE steps is shown in **Fig. 16****,** where steps S1510 to S1540 are the same as described above for **Fig. 15****.** Moreover, the UE reads and decodes contents of MIB of the NES cell. Herein, as shown in **Fig. 16****,** the UE in step S1650 checks the k_{SSB} value in the MIB. The k_{SSB} value (which has also been mentioned above in the context of time window indication) in MIB indicates if the paging/PRACH status is to be considered ON or OFF corresponding to the above-described conditional active or inactive state. A first value, e.g. 31/15 for FR1/FR2 respectively, indicates that paging and/or PRACH is ON, and a second value, e.g. 30/14, indicates PRACH and/or paging being OFF. Upon receiving and checking indication via k_{SSB} value, UE determines the status of paging and/or PRACH when cell stops transmitting OD-SIB1: OFF, as per step S1660, or ON, as per step S1670.

It is noted that if a number of spare bits in the MIB is at least two, a first spare bit may be used to indicate limited or non-limited duration of SIB1 transmission, and a second spare bit may indicate in the case of limited SIB1 transmission whether paging and/or PRACH are ON or OFF after the limited SIB1 transmission duration.

A further example of UE processing is shown in **Fig. 17****.** Steps S1510, S1520 and S1540 are the same as described above for **Figs. 15 and 16****.** In step S1730 of **Fig.17****,** the UE camps on the NES cell, where the UE reads and decodes contents of MIB of the NES cell, wherein the UE processes the k_{SSB} value and the parameter pdcchConfigSIB1 in the MIB.

Purposes of the parameter *pdcchConfigSIB1* include: 1) telling the UE scheduling information of SIB1 for a (e.g. non-NES) cell where SIB1 is transmitted continuously transmitted and 2) for a cell where no SIB1 is transmitted, guiding the UE to find another cell where SIB1 is transmitted.

Furthermore, the k_{SSB} value can be used for NES cell identification. For instance, a specific value of k_{SSB} (e.g. 30/14 for FR1/FR2), when decoded by a NES capable UE (Rel. 19 or later) inform the UE that the cell transmitting the MIB is an NES cell with on-demand SIB1 capability.

If, in the MIB of the NES cell, k_{SSB} values of 30/14 for FR1/FR2 are used for identification of NES cell then 8 bits in corresponding pdcchConfigSIB1 are reserved and unused. 1 bit in *pdcchConfigSIB1,* e.g. a bit among the unused bits, can be repurposed as a bit indicator to indicate paging/PRACH status ON or OFF when OD-SIB1 is not being transmitted.

In step S1750, the UE checks the bit indicator in *pdcchConfigSIB1* in the MIB of the NES cell to determine the status of paging and/or PRACH when cell stops transmitting OD-SIB1: OFF in step S1760, or ON in step S1770.

MIB based paging and/or PRACH status indication allows UE to know the status of paging/PRACH on an NES cell when the OD-SIB1 is not being transmitted. Further, it facilitates for the network to flexibly change the status of paging/PRACH on the fly based on other factors, provided that the UE periodically monitors and decodes the MIB. As shown in step S1530, the UE camps on the NES cell.

### UL-WUS configuration of RAR based paging/PRACH status indication

For a paging signal and/or or a PRACH as a common signal of a cell transmitting on-demand-SIB1, the UE may in some exemplary embodiments receive a configuration of an uplink request for the SIB1, which includes the indication indicative of the ON/OFF status of the PRACH/paging when the on-demand SIB1 has stopped and is not being transmitted.

As described above, the UL-WUS configuration may be received from cell A. For instance, if the UL-WUS configuration includes a configuration of a time window to indicate that the SIB1 duration is limited, in accordance with the above description of UL WUS configuration based time window indication, the configuration of the time window may further include an indicator, e.g. a one-bit indicator, for the status of the paging signal and/or PRACH being either ON or OFF once the time window for SIB1 transmission has expired. Upon receiving the indication, the UE determines the status of paging/PRACH when the NES cell stops transmitting the On-demand SIB1.

Alternatively, the UE may receive a RAR for the SIB1 including the indication indicative of the ON/OFF status of the common signal when the on-demand SIB1 has stopped.

For instance, the RAR may comprise a one-bit indicator indicating whether the paging / PRACH status is ON or OFF when the on-demand SIB1 is not transmitted. As an example, if the RAR indicates a first bit indicating that the SIB1 is transmitted within a configured time window, the RAR may further include a second bit indicator indicating whether, after expiry of the time window, the PRACH and/or paging is ON or OFF. Alternatively, time window indication and PRACH/paging may be jointly indicated (e.g. 00 SIB transmission not limited; 01: SIB transmission within time window and paging/PRACH OFF after expiry; 10: SIB transmission within time window and paging/PRACH ON after expiry). However, it is noted that the indication of PRACH/paging ON/OFF status is not limited to the cases where the time wndow is indicated via RAR.

Indication of the paging/PRACH status via UL-WUS configuration or RAR provides a plain and clear design which facilitates for the UE to know the status of paging/PRACH on NES cell when OD-SIB1 is not being transmitted, either from the time of receiving the configuration or from the time of receiving the RAR. In addition, when the RAR is used, this provides a certain flexibility to the network for changing the status of paging/PRACH after the UL WUS has been configured.

### Validity timer for status information

As described in the present embodiments, a timer (which may also be called "validity timer") may be used to indicate how long the information provided by OD-SIB1 is be considered valid by the UE.

For instance, a timer indicates that the paging/PRACH is considered ON for a period T after SIB1 has been switched off. The UE receives the validity timer as the indication of the ON/OFF status of the common signal (e.g. the PRACH and/or paging). The timer indicates a period during which the common signal is to be considered in the ON status after the on-demand SIB1 has stopped. Based on the validity timer, the UE determines how long the status of paging/PRACH can be considered ON when cell stops transmitting OD-SIB1.

After expiry of the timer, the UE considers the common signal OFF.

Alternatively, if a timer is received, it may also be interpreted by the UE as a minimum period during which the common signal such as PRACH and/or paging is to be considered on. After expiry of the timer, the UE may check other indications, e.g. the above described MIB based paging/PRACH status indications (such as a (spare) bit indicator or numerical (k_{SSB}) indicator to obtain the current status of the PRACH or paging.

The timer may be sent by the gNB, for instance, in the UL-WUS configuration (e.g. sent by cell A), RAR, or in OD-SIB1 itself (sent by the NES cell).

It is noted that although the ON/OFF status of PRACH/paging has been described above as an example, the validity timer in accordance with the present embodiments may generally be used to indicate the validity of status information, e.g. content of the SIB1 including the above mentioned RACH related probability check (UAC), information related to PRACH configuration (e.g., configuration index, msg1-frequency start), paging cycle, search space configuration for other system information.

Providing a validity timer facilitates for the UE to know how long status of paging/PRACH on NES cell can be considered ON or how long other status information from SIB1 can be considered valid once transmission of OD-SIB1 is stopped.

### UE mobility and status information

In the following, a case is considered when a UE first requests the on-demand SIB1 and camps in a NES cell, then reselects the cell and moves to another cell. Later, the UE may move back to the NES cell at a timing when the on-demand SIB1 is no longer transmitted.

Even in such a case where the has camped in cell transmitting the ON-demand SIB1, subsequently moved to another cell and moved back to said cell, the UE may determine the ON/OFF status of the common signal (e.g. PRACH / paging) or other status information from the SIB1 based on one of the previously described indications of the ON/OFF status of the common signal.

For instance, the UE determines the NES cell active status, e.g. whether paging/PRACH status are ON or OFF, by based on the above described validity timer, MIB indication (bit indicator or numerical indicator).

Furthermore, when returning to a cell where the UE has previously camped and received the SIB1, the UE may follow SFN alignment based monitoring for SIB1 as described above, and either store the content or acquire a new SIB1 in accordance with the SFN aligned periodicity.

### RRC connection setup and reconfiguration procedures

Interactions between a UE, gNB, and AMF (a 5GC entity) in the context of a transition of the UE from RRC_IDLE to RRC_CONNECTED for the NAS part are described (see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS Control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

### (Open-RAN)

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul and the F1 interface is defined by the 3GPP. Further, the link between O-DU and O-RU is referred to as fronthaul and its functional split point may be Split Option 7-2x adopted as the O-RAN fronthaul specifications.

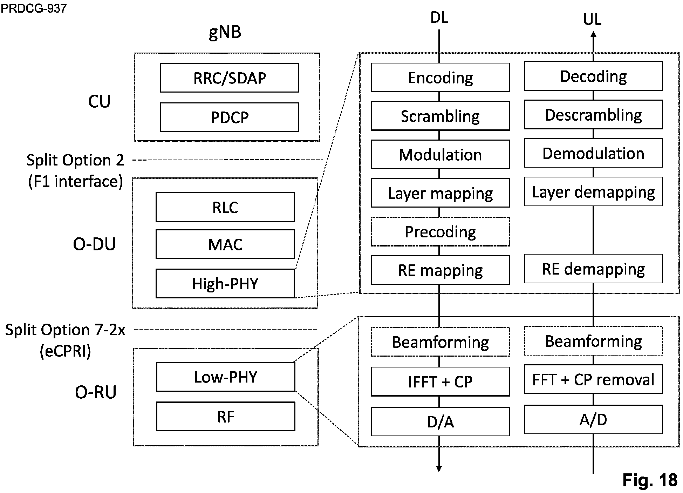

**Fig. 18** illustrates an example in which the base station functionality of the gNB is subjected to functional splitting into CU, O-DU, O-RU by Split Option 2 and Split Option 7-2x.

CU may include, for example, an RRC (radio resource control) function, an SDAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse Fast Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (Fast Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### (SBFD)

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, sub-bandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one direction of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

### (XDD: Cross Division Duplex)

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

### (Control Signals)

In the present disclosure, the downlink control signal (information) related to the present disclosure may be a signal (information) transmitted through PDCCH of the physical layer or may be a signal (information) transmitted through a MAC (Medium Access Control) Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### (Uplink/Downlink/Sidelink)

The present disclosure may be applied to any of uplink, downlink and sidelink.

The present disclosure may be applied to, for example, uplink channels, such as PUSCH (Physical Uplink Shared Channel), PUCCH (Physical Uplink Control Channel), and PRACH (Physical Random Access Channel), downlink channels, such as PDSCH (Physical Downlink Shared Channel), PDCCH (Physical Downlink Control Channel), and PBCH (Physical Broadcast Channel), and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), Vehicle to Everything (V2X) communication, and communication between an Ambient loT Reader and an Ambient loT Device. The channels in the present disclosure may be replaced with PSCCH, PSSCH, Physical Sidelink Feedback Channel (PSFCH), PSBCH, PRDCH (Physical Reader-to-Device Channel), PDRCH (Physical Device-to-Reader Channel), PDCCH, PUCCH, PDSCH, PUSCH, and PBCH. For example, control information of the present disclosure may be replaced with any of DCI, UCI, SCI (Sidelink Control Information), R2D Control Information and D2R Control Information.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### (Ambient loT)

The terminal and the base station in one exemplary embodiment of the preset disclosure may be replaced with any of an Ambient loT Device or an Ambient loT Reader.

The Ambient loT Device may be a wireless communication device having a backscattering function or having a transmission/reception bandwidth of several resource blocks or less. Further, the Ambient loT Reader may be a wireless communication device having a communication function with an Ambient loT Device. The Ambient loT Device may also be referred to as an Ambient loT terminal, an loT terminal, an LPWA (Low Power Wide Area) terminal, or a Tag.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied. Computer-readable medium may be employed to implement the present disclosure, such as a memory storing instructions executable by processing circuitry, or storing other information, configuration registers storing configuration settings, etc., and various combinations thereof.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### Aspects

Summarizing, provided are the following aspects.

Aspect 1. A communication apparatus, comprising: a transceiver, which, in operation, receives an indication indicative of at least one out of monitoring duration, a periodicity, a validity duration, or an ON/OFF status of an on-demand common signal; and circuitry, which, in operation, determines, based on the indication, the monitoring duration, the periodicity, the validity duration, and/or the ON/OFF status of the on-demand common signal.

Aspect 2. The communication apparatus according to Aspect 1, wherein determining the monitoring duration includes determining whether the common signal is to be monitored within a time window or without a configured end.

Aspect 3. The communication apparatus according to Aspect 1, wherein: the on-demand common signal is an on-demand system information block 1, SIB1, the transceiver, in operation, receives, as the indication indicative of the monitoring duration of the SIB1, a configuration of an uplink request for the SIB1, and the circuitry, in operation, determines, based on whether or not the configuration comprises a time window for the SIB1, whether the SIB1 is to be monitored within the time window or without a configured end.

Aspect 4. The communication apparatus according to Aspect 1, wherein: the on-demand common signal is an on-demand system information block 1, SIB1, the transceiver, in operation, receives, a random access response, RAR, to an uplink request for the SIB1, the RAR comprising, as the indication indicative of the monitoring duration of the SIB1, a bit indicator indicating whether the SIB1 is to be monitored within a configured time window or without a configured end.

Aspect 5.The communication apparatus according to Aspect 1, wherein: the on-demand common signal is an on-demand system information block 1, SIB1, the transceiver, in operation, receives a configuration of an uplink request for the SIB1, the configuration comprising the indication indicative of a time interval defining the periodicity of the SIB1, and the circuitry, in operation, determines, based on the periodicity, a monitoring timing for the SIB1, and determines the ON/OF status of the SIB1 by monitoring for the SIB1 at the determined monitoring timing.

Aspect 6. The communication apparatus according to Aspect 5, wherein the configuration of the uplink request for the SIB1 indicates a time window, and the time interval comprises a first time interval defining the periodicity within the time window and a second time interval defining the periodicity outside the time window.

Aspect 7. The communication apparatus according to Aspect 5 or 6, wherein, if the transceiver receives the SIB1 at the determined monitoring timing, the circuitry, in operation, stores a content of the SIB1 to be used for a random access procedure.

Aspect 8. The communication apparatus according to Aspect 4 or 5, wherein, if the transceiver receives the SIB1 at the determined monitoring timing, the circuitry, in operation, when launching a random access procedure, discards the content of the SIB1 received at the determined monitoring timing, obtains a current SIB1 at a later monitoring timing determined following the periodicity of the SIB1, and uses the content of the current SIB1 for the random access procedure.

Aspect 9. The communication apparatus according to Aspect 1, wherein: the on-demand common signal is an on-demand system information block 1, SIB1, and the transceiver, in operation, receives a master information block, MIB, comprising, as the indication indicative of the monitoring duration of the SIB1, a bit indicator indicating whether or not the SIB1 is to be monitored within a configured time window or without a configured end, or a numerical indicator k_{SSB} having a first value indicating that the SIB1 is to be monitored within the configured time window or a second value indicating that the SIB1 is to be monitored without a configured end.

Aspect 10. The communication apparatus according to Aspect 1, wherein: the on-demand common signal is a paging message or a physical uplink random access channel, PRACH of a cell having an on-demand system information block 1, SIB1, and the transceiver, in operation, receives a master information block, MIB, comprising, as the indication indicative of the ON/OFF status of the paging message or of the PRACH when the on-demand SIB1 has stopped, a bit indicator or a numerical indicator k_{SSB} having a first value indicating the ON status and a second value indicating the OFF status.

Aspect 11. The communication apparatus according to Aspect 1, wherein the on-demand common signal is a paging message or a physical uplink random access channel, PRACH of a cell having an on-demand system information block 1, SIB1, and the transceiver, in operation, receives a configuration of an uplink request for a system information block 1, SIB1, or a random access response, RAR, for the SIB1including the indication indicative of the ON/OFF status of the common signal when the on-demand SIB1 has stopped.

Aspect 12. The communication apparatus according to Aspect 1, wherein: the on-demand common signal is a paging message or a physical uplink random access channel, PRACH of a cell having an on-demand system information block 1, SIB1, and the transceiver, in operation, receives, as the indication indicative of the ON/OFF status of the common signal, a timer indicating a period during which the common signal is to be considered in the ON status after the on-demand SIB1 has stopped.

Aspect 13. The communication apparatus according to any one of Aspects 10 to 12, wherein the circuitry, in operation, determines, based on the indication, the ON/OFF status of the on-demand common signal after the communication apparatus has camped in said cell, subsequently moved to another cell and moved back to said cell.

Aspect 14. A network node, comprising: circuitry which, in operation, configure at least one out of monitoring duration, a periodicity, a validity duration, or an ON/OFF status of an on-demand common signal; and a transceiver, which, in operation, transmits an indication indicative at least one out the monitoring duration, the periodicity, the validity duration, and/or the ON/OFF status of the on-demand common signal.

Aspect 15. The network node apparatus according to Aspect 14, wherein configuring the monitoring duration includes determining whether the common signal is to be monitored within a time window or without a configured end.

Aspect 16. The network node according to Aspect 14, wherein: the on-demand common signal is an on-demand system information block 1, SIB1, the circuitry, in operation, determines whether or not the SIB1 is to be monitored within a time window or without a configured end, the transceiver, in operation, transmits, as the indication indicative of the monitoring duration of the SIB1, a configuration of an uplink request for the SIB1, wherein the configuration comprises the time window for the SIB1 if the SIB1 is to be monitored within the time window, and the configuration does not comprise the time window if the SIB1 is to be monitored without a configured end.

Aspect 17. The network node according to Aspect 14, wherein the on-demand common signal is an on-demand system information block 1, SIB1, the circuitry, in operation, determines whether or not the SIB1 is to be monitored within a time window or without a configured end, the transceiver, in operation, transmits a random access response, RAR, to an uplink request for the SIB1, the RAR comprising, as the indication indicative of the monitoring duration of the SIB1, a bit indicator indicating whether the SIB1 is to be monitored within the configured time window or without a configured end.

Aspect 18. The network node according to aspect 14, wherein: the on-demand common signal is an on-demand system information block, the circuitry, in operation, determines a configuration of an uplink request for the SIB1, the configuration comprising a time interval defining the periodicity of the SIB1, determines an ON/OFF status of the SIB1 at a monitoring timing defined by the periodicity, and schedules the SIB1 at the monitoring timing if the ON/OFF status is ON, and skips scheduling the SIB1 at the monitoring timing if the ON/OFF status is OFF, and the transceiver, in operation, transmits a configuration indicative of the time interval defining the periodicity, and transmits the SIB1 in accordance with the scheduling.

Aspect 19. The network node according to aspect 18, wherein the configuration of the uplink request for the SIB1 indicates a time window, and the time interval comprises a first time interval defining the periodicity within the time window and a second time interval defining the periodicity outside the time window.

Aspect 20. The network node according to Aspect 14, wherein: the on-demand common signal is an on-demand system information block 1, SIB1, and the transceiver, in operation, transmits a master information block, MIB, comprising, as the indication indicative of the monitoring duration of the SIB1, a bit indicator indicating whether or not the SIB1 is to be monitored within a configured time window or without a configured end, or a numerical indicator k_{SSB} having a first value indicating that the SIB1 is to be monitored within the configured time window or a second value indicating that the SIB1 is to be monitored without a configured end.

Aspect 21. The network node according to Aspect 14, wherein: the on-demand common signal is a paging message or a physical uplink random access channel, PRACH of a cell having an on-demand system information block 1, SIB1, and the transceiver, in operation, transmits a master information block, MIB, comprising, as the indication indicative of the ON/OFF status of the paging message or of the PRACH when the on-demand SIB1 has stopped, a bit indicator or a numerical indicator k_{SSB} having a first value indicating the ON status and a second value indicating the OFF status.

Aspect 22. The network node according to Aspect 14, wherein: the on-demand common signal is a paging message or a physical uplink random access channel, PRACH of a cell having an on-demand system information block 1, SIB1, and the transceiver, in operation, transmits a configuration of an uplink request for a system information block 1, SIB1, or a random access response, RAR, for the SIB1including the indication indicative of the ON/OFF status of the common signal when the on-demand SIB1 has stopped.

Aspect 23. The network node according to Aspect 14, wherein: the on-demand common signal is a paging message or a physical uplink random access channel, PRACH of a cell having an on-demand system information block 1, SIB1, and the transceiver, in operation, transmits, as the indication indicative of the ON/OFF status of the common signal, a timer indicating a period during which the common signal is to be considered in the ON status after the on-demand SIB1 has stopped.

Aspect 24. A communication method to be performed by a communication apparatus, comprising the steps of: receiving an indication indicative of at least one out of monitoring duration, a periodicity, a validity duration, or an ON/OFF status of an on-demand common signal; and determining, based on the indication, the monitoring duration, the periodicity, the validity duration, and/or the ON/OFF status of the on-demand common signal.

Aspect 24 may be combined with aspects corresponding to any one of Aspects 2 to 24.

Aspect 25. A communication method to be performed by a network node, comprising: configuring at least one out of monitoring duration, a periodicity, a validity duration, or an ON/OFF status of an on-demand common signal; and transmitting an indication indicative at least one out the monitoring duration, the periodicity, the validity duration, and/or the ON/OFF status of the on-demand common signal.

Aspect 25 may be combined with aspects corresponding to any one of Aspects 15 to 23.

Aspect 26. An integrated circuit which, in operation, controls a communication apparatus to carry out the following steps: receiving an indication indicative of at least one out of monitoring duration, a periodicity, a validity duration, or an ON/OFF status of an on-demand common signal; and determining, based on the indication, the monitoring duration, the periodicity, the validity duration, and/or the ON/OFF status of the on-demand common signal.

Aspect 27. An integrated circuit which, in operation controls a network node to carry out the following steps: configuring at least one out of monitoring duration, a periodicity, a validity duration, or an ON/OFF status of an on-demand common signal; and transmitting an indication indicative at least one out the monitoring duration, the periodicity, the validity duration, and/or the ON/OFF status of the on-demand common signal.

A non-transitory computer-readable medium storing instructions which, when operated by a communication apparatus, cause the communication apparatus to carry out the communication method of Aspect 24.

A non-transitory computer-readable medium storing instructions which, when operated by a communication apparatus, cause the communication apparatus to carry out the communication method of Aspect 25.

## Claims

1. A communication apparatus, comprising:
a transceiver, which, in operation, receives an indication indicative of at least one out of monitoring duration, a periodicity, a validity duration, or an ON/OFF status of an on-demand common signal; and
circuitry, which, in operation, determines, based on the indication, the monitoring duration, the periodicity, the validity duration, and/or the ON/OFF status of the on-demand common signal.

2. The communication apparatus according to claim 1, wherein:
the on-demand common signal is an on-demand system information block 1, SIB1,
the transceiver, in operation, receives, as the indication indicative of the monitoring duration of the SIB1, a configuration of an uplink request for the SIB1, and
the circuitry, in operation, determines, based on whether or not the configuration comprises a time window for the SIB1, whether the SIB1 is to be monitored within the time window or without a configured end.

3. The communication apparatus according to claim 1, wherein:
the on-demand common signal is an on-demand system information block 1, SIB1,
the transceiver, in operation, receives, a random access response, RAR, to an uplink request for the SIB1, the RAR comprising, as the indication indicative of the monitoring duration of the SIB1, a bit indicator indicating whether the SIB1 is to be monitored within a configured time window or without a configured end.

4. The communication apparatus according to claim 1, wherein:
the on-demand common signal is an on-demand system information block 1, SIB1,
the transceiver, in operation, receives a configuration of an uplink request for the SIB1, the configuration comprising the indication indicative of a time interval defining the periodicity of the SIB1, and
the circuitry, in operation, determines, based on the periodicity, a monitoring timing for the SIB1, and determines the ON/OF status of the SIB1 by monitoring for the SIB1 at the determined monitoring timing.

5. The communication apparatus according to claim 4, wherein the configuration of the uplink request for the SIB1 indicates a time window, and the time interval comprises a first time interval defining the periodicity within the time window and a second time interval defining the periodicity outside the time window.

6. The communication apparatus according to claim 4 or 5, wherein,
if the transceiver receives the SIB1 at the determined monitoring timing, the circuitry, in operation, stores a content of the SIB1 to be used for a random access procedure.

7. The communication apparatus according to claim 4 or 5, wherein,
if the transceiver receives the SIB1 at the determined monitoring timing, the circuitry, in operation, when launching a random access procedure, discards the content of the SIB1 received at the determined monitoring timing, obtains a current SIB1 at a later monitoring timing determined following the periodicity of the SIB1, and uses the content of the current SIB1 for the random access procedure.

8. The communication apparatus according to claim 1, wherein:
the on-demand common signal is an on-demand system information block 1, SIB1, and
the transceiver, in operation, receives a master information block, MIB, comprising, as the indication indicative of the monitoring duration of the SIB1,
• a bit indicator indicating whether or not the SIB1 is to be monitored within a configured time window or without a configured end, or
• a numerical indicator k_{SSB} having a first value indicating that the SIB1 is to be monitored within the configured time window or a second value indicating that the SIB1 is to be monitored without a configured end.

9. The communication apparatus according to claim 1, wherein:
the on-demand common signal is a paging message or a physical uplink random access channel, PRACH of a cell having an on-demand system information block 1, SIB1, and
the transceiver, in operation, receives a master information block, MIB, comprising, as the indication indicative of the ON/OFF status of the paging message or of the PRACH when the on-demand SIB1 has stopped,
• a bit indicator or
• a numerical indicator k_{SSB} having a first value indicating the ON status and a second value indicating the OFF status.

10. The communication apparatus according to claim 1, wherein
the on-demand common signal is a paging message or a physical uplink random access channel, PRACH of a cell having an on-demand system information block 1, SIB1, and
the transceiver, in operation, receives
• a configuration of an uplink request for a system information block 1, SIB1, or
• a random access response, RAR, for the SIB1
including the indication indicative of the ON/OFF status of the common signal when the on-demand SIB1 has stopped.

11. The communication apparatus according to claim 1, wherein:
the on-demand common signal is a paging message or a physical uplink random access channel, PRACH of a cell having an on-demand system information block 1, SIB1, and
the transceiver, in operation, receives, as the indication indicative of the ON/OFF status of the common signal, a timer indicating a period during which the common signal is to be considered in the ON status after the on-demand SIB1 has stopped.

12. The communication apparatus according to any one of claims 9 to 11, wherein the circuitry, in operation, determines, based on the indication, the ON/OFF status of the on-demand common signal after the communication apparatus has camped in said cell, subsequently moved to another cell and moved back to said cell.

13. A network node, comprising:
circuitry which, in operation, configure at least one out of monitoring duration, a periodicity, a validity duration, or an ON/OFF status of an on-demand common signal; and
a transceiver, which, in operation, transmits an indication indicative at least one out the monitoring duration, the periodicity, the validity duration, and/or the ON/OFF status of the on-demand common signal.

14. A communication method to be performed by a communication apparatus, comprising the steps of:
receiving an indication indicative of at least one out of monitoring duration, a periodicity, a validity duration, or an ON/OFF status of an on-demand common signal; and
determining, based on the indication, the monitoring duration, the periodicity, the validity duration, and/or the ON/OFF status of the on-demand common signal.

15. A communication method to be performed by a network node, comprising:
configuring at least one out of monitoring duration, a periodicity, a validity duration, or an ON/OFF status of an on-demand common signal; and
transmitting an indication indicative at least one out the monitoring duration, the periodicity, the validity duration, and/or the ON/OFF status of the on-demand common signal.
